# EUROPEAN PATENT APPLICATION

(11) **EP 3 544 261 A1**
(43) Date of publication of application: **25.09.2019**
(21) Application number: 17883793.6
(22) Date of filing: 29.09.2017
(51) Int. Cl.: H04L 29/08, H04L 29/06

(54) **DATA TRANSMISSION METHOD AND DEVICE**

(30) Priority: 24.12.2016 CN 201611210824
(71) Applicant: Huawei Technologies Co., Ltd., Longgang District Shenzhen, Guangdong 518129 (CN)
(72) Inventor: DENG, Zhenjie, Shenzhen Guangdong 518129 (CN)
(74) Representative: Gill Jennings & Every LLP
(86) International application number: PCT/CN2017/104547
(87) International publication number: WO 2018/113373

(57) **Abstract**

Embodiments of this application provide a data transmission method, and the method includes: receiving, by a receive end, at least two streams from a transmit end, where each of the at least two streams includes a plurality of data packets, each data packet carries a stream identifier of a stream to which the data packet belongs and a stream data sequence number, and the stream data sequence number indicates a sequence of the data packet in the stream to which the data packet belongs; for at least one of the at least two streams, determining, by the receive end, that a data packet whose stream data sequence number meets a sequential condition has been received; and submitting, by the receive end, the data packet whose stream data sequence number meets the sequential condition. In this way, sequential data packets in a stream can be directly submitted to an application layer, and submission of the sequential data packets in the stream is not affected by out-of-order at an entire connection layer, thereby effectively reducing head-of-line blocking and improving data transmission efficiency.

## Description

This application claims priority to Chinese Patent Application No. 201611210824.7, filed with the Chinese Patent Office on December 24, 2016 and entitled "DATA TRANSMISSION METHOD AND APPARATUS", which is incorporated by reference in its entirety.

### TECHNICAL FIELD

This application relates to the communications field, and in particular, to a data transmission method and apparatus.

### BACKGROUND

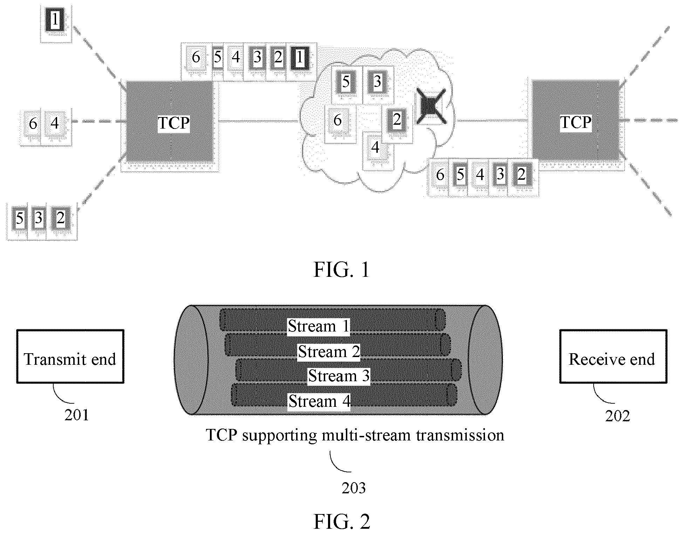

The Transmission Control Protocol (Transmission Control Protocol, TCP) has requirements on reliability and a sequence. In the TCP protocol, out-of-order (out-of-order) means that a data packet with a larger sequence number arrives at a receive end earlier than a data packet with a smaller sequence number. When data is transmitted by using the TCP protocol, data packets need to be submitted to an application layer strictly in sequence. To be specific, the data packets are submitted in a given order, for example, in ascending order of sequence numbers. If there is a packet loss or an excessively long delay for a resource, a request, or a session with a smaller sequence number, even though another independent resource, request, or session with a larger sequence number is successfully received, the independent resource, request, or session with the larger sequence number cannot be submitted to the application layer, and needs to be temporarily stored in a buffer at the receive end. This phenomenon is a head-of-line blocking problem in the TCP protocol. As shown in FIG. 1, a data packet 1, data packets 4 and 6, and data packets 2, 3, and 5 respectively belong to three different resources. The three resources are transmitted by using a same TCP connection, and a transmission sequence of the data packets is from the data packet 1 to the data packet 6. When the data packet 1 is not successfully received due to a reason, even though the data packets 2 to 6 are successfully received in sequence, the data packets 2 to 6 need to be temporarily stored in the buffer, and cannot be submitted to the application layer.

### SUMMARY

Embodiments of this application provide a data transmission method and apparatus, to reduce head-of-line blocking in the TCP protocol and improve data transmission efficiency.

According to a first aspect, a data transmission method is provided, including: receiving, by a receive end, at least two streams from a transmit end, where each of the at least two streams includes a plurality of data packets, each data packet carries a stream identifier of a stream to which the data packet belongs and a stream data sequence number, and the stream data sequence number indicates a sequence of the data packet in the stream to which the data packet belongs; for at least one of the at least two streams, determining, by the receive end, that a data packet whose stream data sequence number meets a sequential condition has been received; and submitting, by the receive end, the data packet whose stream data sequence number meets the sequential condition.

A conventional TCP protocol is extended to support multi-stream data transmission, so that sequential data packets in a stream can be directly submitted to an application layer, and submission of the sequential data packets in the stream is not affected by out-of-order at an entire connection layer, thereby effectively reducing head-of-line blocking and improving data transmission efficiency.

With reference to an implementation of the first aspect, in a first possible implementation of the first aspect, for a stream, the sequential condition includes that a stream data sequence number is a largest stream-level sequence number of a submitted data packet plus 1.

With reference to the first aspect or the first possible implementation of the first aspect, in a second possible implementation, before the determining, by the receive end, that a data packet whose stream data sequence number meets a sequential condition has been received, the receive end records indication information for each of the at least two streams, where the indication information indicates a largest stream-level sequence number of a submitted data packet.

The indication information may be the largest stream data sequence number of the submitted data packet, or may be the largest stream data sequence number of the submitted data packet plus 1, indicating a stream data sequence number of a next data packet that needs to be submitted.

With reference to any one of the first aspect or the first or the second possible implementation of the first aspect, in a third possible implementation, for each of the at least two streams, when the receive end has not submitted any data packet, the indication information indicates that a stream data sequence number of a submitted data packet is empty; and the determining, by the receive end, that a data packet whose stream data sequence number meets a sequential condition has been received is: determining, by the receive end, that a data packet having an initial stream data sequence number has been received.

That a stream data sequence number of a submitted data packet is empty indicates that no data packet has been submitted, and a next data packet that needs to be submitted is the data packet having the initial stream data sequence number.

With reference to any one of the first aspect or the first to the third possible implementations of the first aspect, in a fourth possible implementation, each data packet further carries a stream priority identifier; and when the receive end receives a plurality of data packets whose stream data sequence numbers meet the sequential condition, the receive end preferentially submits a data packet in a stream that has a high priority and that is indicated by the stream priority identifier.

When the receive end has a limited processing capability, the receive end may be unable to submit a plurality of data packets whose stream data sequence numbers meet the sequential condition. In this case, the receive end determines, based on the stream priority identifier, a data packet having a high priority, and preferentially submits the data packet having the high priority.

With reference to any one of the first aspect or the first to the fourth possible implementations of the first aspect, in a fifth possible implementation, each of the at least two streams corresponds to at least one resource.

One resource may be transmitted by using one stream. In this way, after a data packet in a stream is submitted, transmission of a resource corresponding to the stream may be completed without being affected by uncompleted transmission of another resource.

With reference to any one of the first aspect or the first to the fifth possible implementations of the first aspect, in a sixth possible implementation, before the receive end submits the data packet whose stream data sequence number meets the sequential condition, the receive end receives a preset quantity of consecutive data packets following the data packet meeting the sequential condition. Afterwards, the receive end submits the data packet meeting the sequential condition and the preset quantity of consecutive data packets following the data packet meeting the sequential condition.

According to a second aspect, a TCP connection establishment method is provided, including: receiving, by a receive end, a connection establishment request from a transmit end, where the connection establishment request carries a multi-stream capability indication parameter of the transmit end; returning, by the receive end, a connection establishment response to the transmit end, where the connection establishment response carries a multi-stream capability indication parameter of the receive end; and then receiving, by the receive end, a connection establishment response from the transmit end, and establishing a connection to the transmit end.

A problem of compatibility with a conventional TCP protocol can be better processed by performing multi-stream capability negotiation. In addition, a connection supporting multi-stream transmission is established after the multi-stream capability negotiation, to avoid a problem in the prior art that load pressure of a server is heavy and an initial delay is long because a plurality of TCP connections are established to transmit data.

With reference to an implementation of the second aspect, in a first possible implementation of the second aspect, the multi-stream capability indication parameter of the receive end includes a maximum quantity of accepted inbound streams at the receive end, and a quantity of streams received by the receive end from the transmit end is less than or equal to the maximum quantity of accepted inbound streams at the receive end.

With reference to the second aspect or the first possible implementation of the second aspect, in a second possible implementation, the multi-stream capability indication parameter of the transmit end includes a maximum quantity of accepted inbound streams at the transmit end, and a quantity of streams sent by the receive end to the transmit end is less than or equal to the maximum quantity of accepted inbound streams at the transmit end.

The maximum quantity of accepted inbound streams at the receive end is unnecessarily the same as the maximum quantity of accepted inbound streams at the transmit end. The transmit end and the receive end determine the maximum quantity of accepted inbound streams of each other through negotiation. In a subsequent data transmission process, the transmit end and the receive end send, to each other, streams whose quantity does not exceed the maximum quantity of accepted inbound streams of each other.

According to a third aspect, a computing device is provided, including a processor, a memory, a bus, and a communications interface, where the memory is configured to store a computing device executable instruction, the processor is connected to the memory by using the bus, and when the computing device runs, the processor executes the computer executable instruction stored in the memory, so that the computing device performs the method according to the first aspect and any possible implementation of the first aspect.

According to a fourth aspect, a computing device is provided, including a processor, a memory, a bus, and a communications interface, where the memory is configured to store a computing device executable instruction, the processor is connected to the memory by using the bus, and when the computing device runs, the processor executes the computer executable instruction stored in the memory, so that the computing device performs the method according to the second aspect and any possible implementation of the second aspect.

According to a fifth aspect, a computer-readable storage medium is provided. The computer-readable storage medium stores executable program code, and the program code is used for implementing the method according to the first aspect and any possible implementation of the first aspect.

According to a sixth aspect, a computer-readable storage medium is provided. The computer-readable storage medium stores executable program code, and the program code is used for implementing the method according to the second aspect and any possible implementation of the second aspect.

According to a seventh aspect, a data transmission apparatus is provided, including a module configured to perform the method according to the first aspect and any possible implementation of the first aspect.

According to an eighth aspect, a TCP connection establishment apparatus is provided, including a module configured to perform the method according to the second aspect and any possible implementation of the second aspect.

According to the technical solutions provided in the embodiments of this application, a conventional TCP protocol is extended to support multi-stream capability negotiation and multi-stream data transmission, so that sequential data packets in a stream can be directly submitted to an application layer, and submission of the sequential data packets in the stream is not affected by out-of-order at an entire connection layer, thereby effectively reducing head-of-line blocking and improving data transmission efficiency. In addition, compared with establishment of a plurality of TCP connections, where each independent TCP connection needs to be established through a three-way handshake, in the technical solutions provided in the embodiments of this application, a quantity of TCP connections can be effectively decreased, thereby reducing load pressure of a server and effectively reducing an initial delay generated during connection establishment.

### BRIEF DESCRIPTION OF DRAWINGS

To describe the technical solutions in the embodiments of this application or in the prior art more clearly, the following briefly describes the accompanying drawings required for describing the embodiments or the prior art.
FIG. 1 is a schematic diagram of a head-of-line blocking phenomenon in the prior art;
FIG. 2 is a schematic diagram of a network architecture according to an embodiment of this application;
FIG. 3 is a schematic diagram of a hardware structure of a computer device 300 according to an embodiment of this application;
FIG. 4 is an example flowchart of a multi-stream TCP connection establishment method 400 according to an embodiment of this application;
FIG. 5 is a schematic diagram of an encapsulation format of a TCP option according to an embodiment of this application;
FIG. 6 is a schematic diagram of an encapsulation format of an extended multi-stream TCP capability negotiation option according to an embodiment of this application;
FIG. 7 is an example flowchart of multi-stream TCP capability negotiation according to an embodiment of this application;
FIG. 8 is an example flowchart of a data transmission method 800 according to an embodiment of this application;
FIG. 9 is a schematic diagram of an encapsulation format of an extended multi-stream transmission option according to an embodiment of this application;
FIG. 10 is an example flowchart of a data transmission method according to an embodiment of this application;
FIG. 11 is a schematic diagram of a data transmission method according to an embodiment of this application;
FIG. 12 is a schematic diagram of a data transmission method according to an embodiment of this application;
FIG. 13 is a schematic structural diagram of a data transmission apparatus 1300 according to an embodiment of this application; and
FIG. 14 is a schematic structural diagram of a data transmission apparatus 1400 according to an embodiment of this application.

### DESCRIPTION OF EMBODIMENTS

FIG. 2 is a schematic diagram of a network architecture according to an embodiment of this application. In FIG. 2, a transmit end 201 and a receive end 202 transmit data to each other by using a multi-stream TCP connection 203 provided in this application. In this application, the multi-stream TCP connection is a TCP connection that can be used for simultaneously transmitting two or more streams. A TCP connection in the prior art does not support simultaneous transmission of two or more streams. In this application, the TCP protocol is extended, so that two or more streams can be simultaneously transmitted through the TCP connection. The transmit end 201 may be a terminal or a server, and the receive end 202 may also be a terminal or a server. According to the TCP connection 203 supporting multi-stream transmission, different resources at an application layer may be transmitted by using different streams at a transport layer. In this way, transmission of data packets in a stream may not be delayed due to out-of-order of data packets in another stream at the transport layer. The data packets in the data stream can be submitted to the application layer provided that the data packets are sequential. For example, when the transmit end 201 is a web page server, and the receive end 202 is a tablet computer, a web page and a picture can be transmitted by using different streams. The picture resource can be transmitted by using another stream, with no need to wait for completion of transmission of the web page, thereby improving transmission efficiency, improving user experience, and avoiding or reducing head-of-line blocking. FIG. 2 shows a stream 1 to a stream n, which are represented by Stream 1, Stream 2, Stream 3, and Stream n. A resource may be a picture, audio, a video, text, a session, a request, and the like.

It should be understood that in the embodiments of this application, the terminal may be referred to as user equipment (User Equipment, UE), an access terminal, a terminal device, a subscriber unit, a subscriber station, a mobile station, a mobile console, a remote station, a remote terminal, a mobile device, a user terminal, a wireless communications device, a user agent, or a user apparatus. The terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, or another processing device connected to a wireless modem, an in-vehicle device, a wearable device, a terminal device in a future new radio (New Radio, NR) network, or the like.

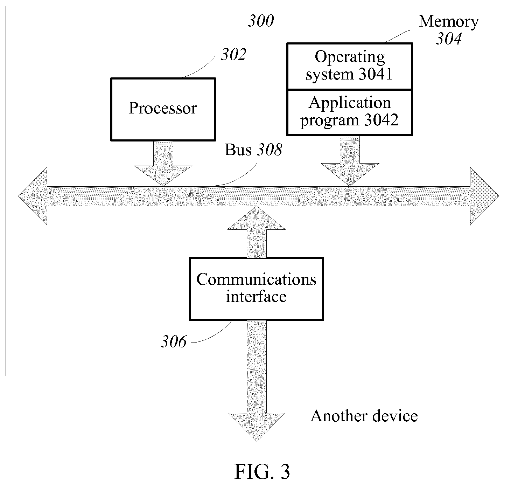

The transmit end 201 and the receive end 202 each may be implemented in a form of a computer device. FIG. 3 is a schematic diagram of a hardware structure of a computer device 300 according to an embodiment of this application. As shown in FIG. 3, the computer device 300 includes a processor 302, a memory 304, a communications interface 306, and a bus 308. The processor 302, the memory 304, and the communications interface 306 are in a communication connection with each other by using the bus 308.

The processor 302 may be a general-purpose central processing unit (Central Processing Unit, CPU), a microprocessor, an application-specific integrated circuit (Application Specific Integrated Circuit, ASIC), or one or more integrated circuits, and is configured to execute a related program to implement the technical solutions provided in the embodiments of the present invention.

The memory 304 may be a read-only memory (Read Only Memory, ROM), a static storage device, a dynamic storage device, or a random access memory (Random Access Memory, RAM). The memory 304 may store an operating system 3041 and another application program 3042. When the technical solutions provided in the embodiments of this application are implemented by using software or firmware, program code used for implementing the technical solutions provided in the embodiments of this application is stored in the memory 304, and is executed by the processor 302.

The communications interface 306 uses a transceiver apparatus, for example, but is not limited to a transceiver, to implement communication between the computer device and another device or a communications network.

The bus 308 may include a channel used for transferring information between parts (for example, the processor 302, the memory 304, and the communications interface 306).

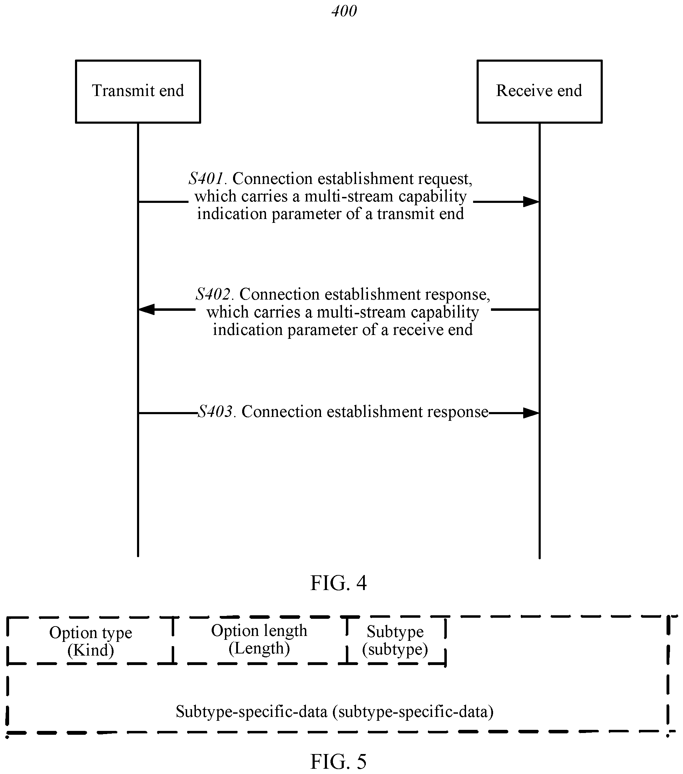

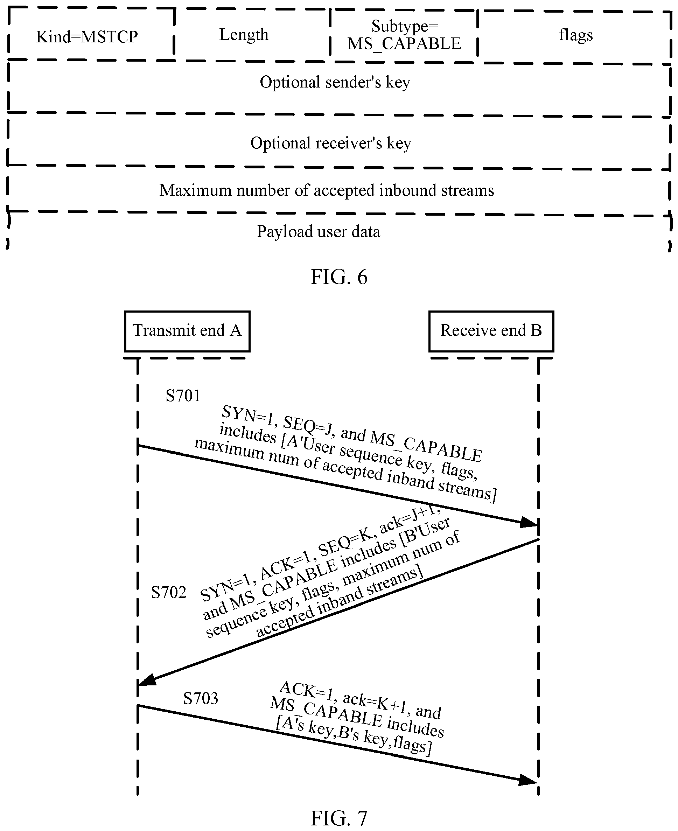

When the computer device 300 is the receive end 202, the processor 302 executes the program code, stored in the memory 304, for implementing the technical solutions provided in the embodiments of this application, to implement methods shown in embodiments of FIG. 4 and FIG. 7.

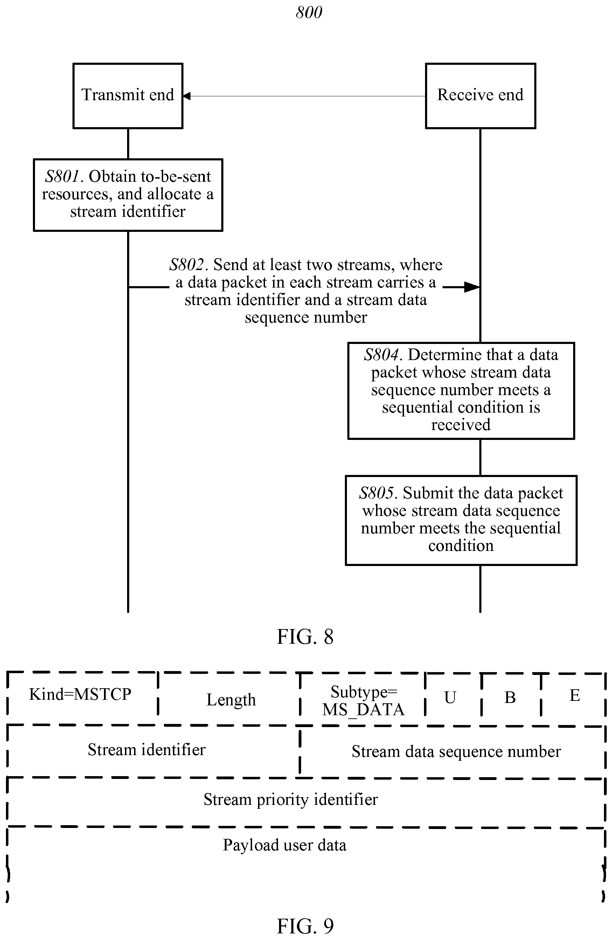

When the computer device 300 is the receive end 202, the processor 302 may further execute the program code, stored in the memory 304, for implementing the technical solutions provided in the embodiments of this application, to implement a method shown in an embodiment of FIG. 8.

In this embodiment of this application, the TCP protocol is extended, so that the extended TCP protocol supports multi-stream transmission, thereby effectively reducing head-of-line blocking. A multi-stream TCP connection establishment process and how multi-stream transmission is performed by using a multi-stream TCP connection are described below with reference to specific implementations.

FIG. 4 is an example flowchart of a multi-stream TCP connection establishment method 400 according to an embodiment of the present invention. How a multi-stream TCP capability is negotiated between a transmit end and a receive end to establish a multi-stream TCP connection is described below with reference to specific steps. The multi-stream TCP connection establishment method 400 may be performed by the transmit end 201 and the receive end 202 shown in FIG. 2.
S401. The transmit end sends a connection establishment request to the receive end, where the connection establishment request carries a multi-stream capability indication parameter of the transmit end.
S402. The receive end returns a connection establishment response to the transmit end, where the connection establishment response carries a multi-stream capability indication parameter of the receive end.
S403. The transmit end determines, based on the multi-stream capability indication parameter of the receive end, that the receive end supports a multi-stream TCP capability, returns a connection establishment response to the receive end, and establishes a multi-stream TCP connection to the receive end.

Specifically, in the foregoing method, a conventional TCP protocol needs to be extended, to support a multi-stream TCP capability negotiation function. For example, the conventional TCP protocol may be extended by extending a TCP option. Usually, an encapsulation format of the option is shown in FIG. 5, and includes an option type Kind, an option length length, a subtype subtype, and subtype-specific-data subtype-specific-data. The option type Kind field indicates a function name that needs to be extended, occupies 8 bits, and has 256 possible names. For example, Kind=0X3 indicates a selective acknowledgement (Selective Acknowledgement, SACK) function. The option type may be defined as Kind=MSTCP, to indicate that a local end supports a multi-stream TCP (multi-streaming transport control protocol). A value may be allocated by the Internet Assigned Numbers Authority (Internet Assigned Numbers Authority, IANA) or another organization.

In S401 and S402, the carried multi-stream capability indication parameter may be MSTCP. When the receive end receives the connection establishment request that carries an MSTCP field and that is from the transmit end, the receive end determines that the transmit end supports the multi-stream TCP capability. When the transmit end receives the connection establishment response that carries an MSTCP field and that is from the receive end, the transmit end determines that the receive end supports the multi-stream TCP capability. Then, the transmit end returns the connection establishment response to the receive end, and establishes the multi-stream TCP connection to the receive end.

In an MSTCP option, a subtype may be further defined as subtype=MS_CAPABLE to indicate a multi-stream TCP capability negotiation option, so as to perform multi-stream TCP capability negotiation. A value of MS_CAPABLE is allocated by the IANA. Information is carried in the subtype-specific-data (subtype-specific-data) of MS_CAPABLE to implement multi-stream TCP capability negotiation. The information may include flags, key information of the transmit end, key information of the receive end, and a maximum quantity of accepted inbound streams (maximum number of accepted inbound streams) at the local end, and the like. The key information is used for identity authentication and subsequent operation authentication. The key information is not generated in a unique manner, but needs to be sufficiently random to avoid decryption. The key information may be generated by using different encryption algorithms, for example, a keyed hash encryption algorithm (Hash Message Authentication Code-Secure Hash Algorithm 1, HMAC-SHA1). An encryption algorithm used for generating the key information is identified by using the flags. In a three-way handshake process in the TCP, at the first two handshake stages, the transmit end and the receive end send only respective key information of the transmit end and the receive end , and during a third handshake, the transmit end sends the key information of the two peer ends to the receive end. A maximum quantity of accepted inbound streams at a local end indicates a processing capability of the local end. During multi-stream transmission, a quantity of streams received by the local end cannot exceed the maximum quantity of accepted inbound streams of the local end.

For example, the maximum quantity of accepted inbound streams at the transmit end is 3, and the maximum quantity of accepted inbound streams at the receive end is 5. After a connection is established between the transmit end and the receive end, a quantity of streams sent by the transmit end to the receive end may be 1, 2, 3, 4, or 5, but cannot exceed 5. A quantity of streams sent by the receive end to the transmit end may be 1, 2, or 3, but cannot exceed 3.

An encapsulation format of an extended multi-stream TCP capability negotiation option may be shown in FIG. 6, where payload user data is actual payload user data, namely, data of an upper layer application.

It should be noted that all parameters in the foregoing subtype-specific-data are optional implementations in this application. For example, the maximum quantity of accepted inbound streams of the local end may also be determined through pre-agreement or preconfiguration.

A multi-stream TCP connection establishment process is described below with reference to a specific implementation example.

As shown in FIG. 7, after a multi-stream TCP capability negotiation option is extended, the multi-stream TCP connection establishment process may include a capability negotiation process, as shown in S701, S702, and S703.
S701. A transmit end A requesting to establish a multi-stream TCP connection sets a request synchronization identifier (Synchronous, SYN) flag to 1, and randomly generates a sequence number (Sequence Number, SEQ), where SEQ=J; and sends a multi-stream TCP connection establishment request to a receive end B, where the multi-stream TCP connection establishment request carries the foregoing extended multi-stream TCP capability negotiation option MS_CAPABLE, including key information of the transmit end A, flags, and a maximum quantity of accepted inbound streams at the transmit end A.
S702. After receiving the multi-stream TCP connection request from the transmit end A, the receive end B determines, based on the multi-stream TCP capability negotiation option MS_CAPABLE sent by the transmit end A, that the transmit end A supports a multi-stream TCP capability; and obtains the maximum quantity of accepted inbound streams at the transmit end A. The receive end B sets a SYN flag to 1; sets an acknowledgement synchronization identifier (Acknowledgement, ACK) to 1; randomly generates an SEQ, where SEQ=K; sets an acknowledgement number (acknowledgement number, ack) to J+1; and returns a multi-stream TCP connection establishment response to the transmit end A, where the multi-stream TCP connection establishment response carries the foregoing extended multi-stream TCP capability negotiation option MS_CAPABLE, including key information of the receive end B, flags, and a maximum quantity of accepted inbound streams at the receive end B.
S703. The transmit end A determines, based on the multi-stream TCP capability negotiation option MS_CAPABLE returned by the receive end B, that the receive end B supports a multi-stream TCP capability; and obtains the maximum quantity of accepted inbound streams at the receive end B. The transmit end A sets an ACK flag to 1, sets an ack to K+1 (that is, an SEQ of the receive end B plus 1), records the key information of the transmit end A and the key information of the receive end B, and returns a multi-stream TCP connection establishment response to the receive end B, where the multi-stream TCP connection establishment response carries the extended multi-stream TCP capability negotiation option MSCAPABLE, including the key information of the transmit end A, the key information of the receive end B, and the flags.

Afterwards, the transmit end A and the receive end B complete multi-stream TCP capability negotiation, and establish the multi-stream TCP connection.

FIG. 8 is an example flowchart of a data transmission method 800 according to an embodiment of this application. In this embodiment, the data transmission method 800 may be performed by the transmit end 201 and the receive end 202 shown in FIG. 2.

S801. The transmit end obtains at least two to-be-sent resources, where each resource is transmitted by using one stream, and each resource is divided into data packets for transmission by using a stream; and the transmit end allocates a stream identifier to each stream, where a data packet in each stream carries a stream identifier of a stream to which the data packet belongs and a stream data sequence number, and the stream data sequence number indicates a sequence of the data packet in the stream to which the data packet belongs.

One stream may be used for transmitting a plurality of resources. In this embodiment, that one stream is used for transmitting one resource is used as an example for description.
S802. The transmit end sends, to the receive end, at least two streams for transmitting the at least two resources.
S803. The receive end receives the at least two streams from the transmit end.

Specifically, the transmit end sends, to the receive end by using a multi-stream TCP connection, the at least two streams for transmitting the at least two resources.

In a method for transmitting data by using a multi-stream TCP connection, a conventional TCP protocol needs to be extended to support a multi-stream data transmission function. The conventional TCP protocol may be extended by extending a TCP option.

A subtype may be defined as subtype=MS_DATA in the foregoing MSTCP option, to indicate a multi-stream data transmission option. A stream identifier (Stream Identifier) is defined in subtype-specific-data of MS_DATA to uniquely indicate a stream. A stream data sequence number (Stream Data Sequence Number, SDSN) is defined to indicate a sequence of a data packet in a stream. A stream priority identifier (Stream Priority Identifier) may be further defined to indicate a priority of a stream. The stream priority identifier is used for ensuring that a stream having a relatively high priority is preferentially used for transmission, thereby improving user experience of an upper layer application. In addition, because a data packet size may exceed a maximum quantity of accepted bytes in the TCP, one data packet needs to be divided into a plurality of data packets. A flag B may be defined to indicate a first packet of a divided data packet, and a flag E may be defined to indicate a last packet of the divided data packet. Meanings of values of the flag B and the flag E are shown in Table 1.

**Table 1 Meanings of a flag B and a flag E**

| B | E | Meaning |
|---|---|---|
| Valid | Valid | A data packet is not divided |
| Valid | Invalid | First packet of a divided data packet |
| Invalid | Valid | Last packet of a divided data packet |
| Invalid | Invalid | Intermediate packet of a divided data packet |

Moreover, a flag U may be further defined in the subtype-specific-data of MS_DATA to indicate whether streams may be submitted out of order. If the flag U is valid, the data packets in the stream are submitted immediately when the data packets are successfully received. If the flag U is invalid, the data packets in the stream need to be submitted in sequence, and submitted in a sequence of SDSNs.

In the foregoing descriptions of the flags B, E, and U, "valid" may be indicated by setting the flag to 1, and "invalid" may be indicated by setting the flag to 0. Alternatively, "valid" may be indicated by setting the flag to 0, and "invalid" may be indicated by setting the flag to 1.

An encapsulation format of an extended multi-stream transmission option may be shown in FIG. 9.

A data packet sent by the transmit end to the receive end by using the multi-stream TCP connection carries the foregoing extended multi-stream transmission option. A stream identifier Stream Identifier is used for carrying a stream identifier allocated by the transmit end to each stream, and an SDSN is used for carrying a stream data sequence number of the data packet in a stream to which the data packet belongs. For example, the transmit end sends three streams to the receive end by using the multi-stream TCP connection, and stream identifiers of the three streams are respectively Stream 1, Stream 2, and Stream 3. A value of a stream identifier of a data packet belonging to a stream 1 is Stream 1, a value of a stream identifier of a data packet belonging to a stream 2 is Stream 2, and a value of a stream identifier of a data packet belonging to a stream 3 is Stream 3. SDSNs of data packets in the stream 1 are 0 to 199, SDSNs of data packets in the stream 2 are 0 to 399, and SDSNs of data packets in the stream 3 are 0 to 499.
S804. For each of the at least two streams, the receive end determines, based on a stream data sequence number of a submitted data packet and a stream data sequence number of a received data packet, whether the stream data sequence number of the received data packet meets a sequential condition.
S805. The receive end submits a data packet whose stream data sequence number meets the sequential condition.

For a stream, the sequential condition includes that a stream data sequence number is a largest stream-level sequence number of a submitted data packet plus 1, where 1 is a quantity of data packets. For example, for the stream 1, a largest stream-level sequence number of a submitted data packet is 10. In this case, for the stream 1, receiving a data packet whose stream data sequence number meets the sequential condition includes receiving a data packet next to the data packet whose stream data sequence number is 10, namely, a data packet whose stream data sequence number is 11. For another example, when a stream data sequence number is represented by an amount of data carried in a data packet, and an amount of data carried in one data packet is 576 bytes, for the stream 1, if a largest stream-level sequence number of a submitted data packet is 5760, for Stream 1,receiving a data packet whose stream data sequence number meets the sequential condition includes receiving a data packet whose stream data sequence number is greater than the data packet whose stream data sequence number is 5760 by 576 bytes, namely, a data packet whose stream data sequence number is 6336.

Before the receive end determines that the data packet whose stream data sequence number meets the sequential condition has been received, the receive end records indication information for each of the at least two streams. The indication information indicates a largest stream-level sequence number of a submitted data packet.

For each of the at least two streams, when the receive end has not submitted any data packet, the indication information indicates that a stream data sequence number of a submitted data packet is empty. That the receive end determines that the data packet whose stream data sequence number meets the sequential condition has been received is as follows: the receive end determines that a data packet having an initial stream data sequence number has been received.

After receiving a data packet, the receive end determines an SDSN of the received data packet. If the SDSN of the received data packet is an initial stream data sequence number in a stream to which the data packet belongs, the receive end submits the data packet. For example, if the receive end receives a data packet with a stream identifier of Stream 2 and an SDSN of 0, and the receive end determines that the SDSN 0 is the initial stream data sequence number in the stream 2, the receive end submits the data packet. After submitting the data packet, the receive end records indication information, and the indication information indicates that the data packet with the SDSN of 0 in the stream 2 has been submitted. Alternatively, if the SDSN of the data packet received by the receive end is not the initial stream data sequence number in the stream to which the data packet belongs, for example, the receive end receives a data packet with a stream identifier of Stream 2 and an SDSN of 10, the receive end determines whether a data packet whose SDSN is less than the SDSN of the received data packet by 1 has been submitted, for example, determines whether a data packet with an SDSN of 9 in the stream 2 has been submitted. If the data packet whose SDSN is less than the SDSN of the received data packet by 1 has been submitted, the receive end submits the received data packet. For example, if the data packet with the SDSN of 9 in the stream 2 has been submitted, the receive end submits the received data packet with the SDSN of 10 in the stream 2. The receive end records indication information, and the indication information indicates that the data packet with the SDSN of 10 in the stream 2 has been submitted. For the stream 2, the indication information may be SDSN=10 or SDSN=11, indicating that the data packet with the SDSN of 10 has been submitted, or indicating that a next data packet that needs to be submitted is a data packet with an SDSN of 11 in the stream 2.

It should be noted that if the receive end has not submitted any data packet, the indication information indicates "empty", and the indication information may be null or the initial stream data sequence number. For example, if the receive end has not submitted any data packet in the stream 2, the indication information may be SDSN=null or SDSN=0, indicating that no data packet belonging to the stream 2 has been submitted, or indicating that a next data packet that needs to be submitted is a data packet whose SDSN is the initial stream data sequence number in the stream 2.

Each data packet may further carry a stream priority identifier. When the receive end receives a plurality of data packets whose stream data sequence numbers meet the sequential condition, the receive end preferentially submits a data packet in a stream that has a high priority and that is indicated by the stream priority identifier.

For example, the receive end receives a data packet with an SDSN of 20 in the stream 1 and a data packet with an SDSN of 10 in the stream 2, and before this, a data packet with an SDSN of 19 in the stream 1 and a data packet with an SDSN of 9 in the stream 2 have been submitted. When the receive end currently has a limited processing capability, if a priority of the stream 2 is higher than a priority of the stream 1, the receive end first submits the data packet with the SDSN of 9 in the stream 2.

Each data packet may further carry a transmission sequence number, and the transmission sequence number indicates a sequence of the data packet in all data packets. After the receive end receives the data packet from the transmit end, the method further includes the following: the receive end returns a receiving response to the transmit end. The receiving response carries an indication parameter, and the indication parameter indicates a transmission sequence number of the data packet whose stream data sequence number meets the sequential condition.

In the technical solution provided in this embodiment of this application, a data packet transmitted by using the multi-stream TCP connection may carry a transmission sequence number. It may be considered that the transmission sequence number is a sequence number (sequence number, SEQ) in the prior art. Transmission sequence numbers are not used for distinguishing between streams, but are overall sequences of data packets in all streams.

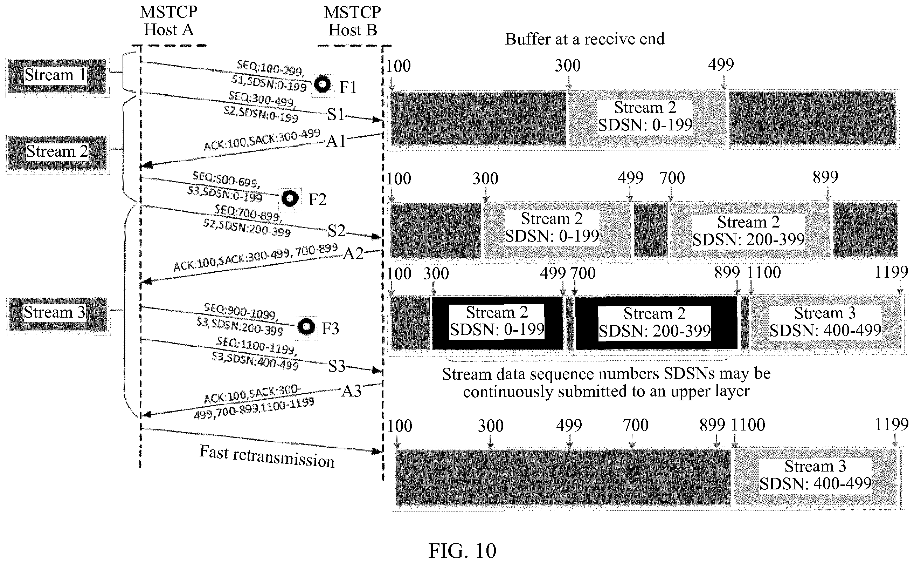

FIG. 10 is an example flowchart of a data transmission method according to an embodiment of this application. In FIG. 10, both a transmit end Host A and a receive end Host B support a multi-stream TCP capability, and a multi-stream TCP connection has been established between Host A and Host B. Host A sends three streams to Host B by using the multi-stream TCP connection, and stream identifiers of the three streams are respectively Stream 1, Stream 2, and Stream 3. SEQs of data packets in a stream 1 are 100 to 299, and SDSNs of the data packets are 0 to 199. SEQs of data packets in a stream 2 are 300 to 499 and 700 to 899, and SDSNs of the data packets are 0 to 399. SEQs of data packets in a stream 3 are 500 to 699 and 900 to 1199, and SDSNs of the data packets are 0 to 499. The stream 1, the stream 2, and the stream 3 are transmitted by using the established multi-stream TCP connection.

Host A sends data packets whose SEQs are 100 to 499 at a moment. Data packets with SEQs of 100 to 299 and SDSNs of 0 to 199 belong to the stream 1, and data packets with SEQs of 300 to 499 and SDSNs of 0 to 199 belong to the stream 2. Due to an excessively long network delay, a transmission packet loss, or the like, the data packets belonging to the stream 1 are not successfully received by Host B, as shown by F1 in the figure, and Host B successfully receives only the data packets with the SEQs of 300 to 499 and belonging to the stream 2, as shown by S1 in the figure. Before submitting the received data packets, Host B determines that no data packet in the stream 2 has been submitted, and that a next data packet that needs to be submitted is a data packet with an SDSN of 0 in the stream 2. Accordingly, Host B determines that the received data packets with the SDSNs of 0 to 199 and belonging to the stream 2 may be submitted, and Host B submits the data packets with the SDSNs of 0 to 199 and belonging to the stream 2.

Although the data packets with the SEQs of 300 to 499 are out of order in an arrangement sequence of all data packets, that is, the data packets are out of order at an entire TCP connection layer, the data packets with the SEQs of 300 to 499 are the data packets with the SDSNs of 0 to 199 in the stream 2. For the stream 2, these data packets are in sequence and may be submitted to an application layer. In this way, a buffer at the receive end does not need to buffer the data packets with the SEQs of 300 to 499, and the receive end can submit the data packets with the SEQs of 300 to 499, with no need to wait for the data packets with the SEQs of 100 to 299 to be successfully received. Therefore, buffer space is released and data transmission efficiency is improved. The application layer can process the stream 2, with no need to wait for completion of data transmission of the stream 1, thereby improving experience quality of an application.

After receiving the data packets with the SEQs of 300 to 499 and belonging to the stream 2, Host B sends a selective acknowledgement (SACK) to Host A, as shown by A1 in the figure. A format of the SACK is ACK: 100 and SACK: 300 to 499. This indicates that a maximum transmission sequence number SEQ of a data packet in continuously received data packets is 99, a transmission sequence number SEQ of a next data packet that expects to be received is 100, and SEQs of data packets that arrive at and are buffered at the receive end are 300 to 499. Host B records that a largest stream-level sequence number of a submitted data packet in the stream 2 is SDSN=199.

After receiving the SACK message from Host B, Host A sends data packets with SEQs of 500 to 899. Data packets with SEQs of 500 to 699 and SDSNs of 0 to 199 belong to the stream 3, and data packets with SEQs of 700 to 899 and SDSNs of 200 to 399 belong to the stream 2. Likewise, due to an excessively long network delay, a transmission packet loss, or the like, the data packets belonging to the stream 3 are not successfully received by Host B, as shown by F2 in the figure, and Host B successfully receives only the data packets with the SEQs of 700 to 899 and belonging to the stream 2, as shown by S2 in the figure. Host B determines, based on the previously recorded largest stream data sequence number SDSN=199 of the submitted data packet in the stream 2, that the data packets with the SDSNs of 200 to 399 and belonging to the stream 2 may be submitted, and Host B submits the data packets with the SDSNs of 200 to 399 and belonging to the stream 2. Host B records that a largest stream-level sequence number of a submitted data packet in the stream 2 is SDSN=399.

After receiving the data packets with the SDSNs of 200 to 399 and belonging to the stream 2, Host B sends a SACK to Host A, as shown by A2 in the figure. A format of the SACK is ACK: 100 and SACK: 300 to 499 and 700 to 899. This indicates that a maximum transmission sequence number SEQ of a data packet in continuously received data packets is 99, a transmission sequence number SEQ of a next data packet that expects to be received is 100, and SEQs of data packets that arrive at and are buffered at the receive end are 300 to 499 and 700 to 899. Although the data packets with the SEQs of 700 to 899 are out of order in an arrangement sequence of all data packets, that is, the data packets are out of order at the entire TCP connection layer, the data packets with the SEQs of 700 to 899 are the data packets with the SDSNs of 200 to 399 in the stream 2. For the stream 2, because the data packets with the SDSNs of 0 to 199 have been submitted, the data packets with the SDSNs of 200 to 399 are in sequence, and may be submitted to the application layer. In this way, buffer space at the receive end is released.

After receiving the SACK message from Host B, Host A sends data packets with SEQs of 900 to 1199. All the data packets belong to the stream 3. Due to an excessively long network delay, a transmission packet loss, or the like, the data packets with the SEQs of 900 to 1099 are not successfully received by Host B, as shown by F3 in the figure, and Host B successfully receives only data packets with SEQs of 1100 to 1199, as shown by S3 in the figure. Before submitting the received data packets, Host B determines that no data packet in the stream 3 has been submitted, and that a next data packet that needs to be submitted is a data packet with an SDSN of 0 in the stream 3. The data packets with the SDSNs of 0 to 399 are not successfully received. Accordingly, Host B determines that data packets with SDSNs of 400 to 499 in the stream 3 do not meet the sequential condition. Therefore, the data packets with the SDSNs of 400 to 499 in the stream 3 need to be buffered in the buffer at the receive end, and can be submitted only after the data packets with the SDSNs of 0 to 399 in the stream 3 are successfully received and submitted.

After receiving the data packets with the SDSNs of 400 to 499 and belonging to the stream 3, Host B sends a SACK to Host A, as shown by A3 in the figure. A format of the SACK is ACK: 100 and SACK: 300 to 499, 700 to 899, and 1100 to 1199. This indicates that a maximum transmission sequence number SEQ of a data packet in continuously received data packets is 99, a transmission sequence number SEQ of a next data packet that expects to be received is 100, and SEQs of data packets that arrive at and are buffered at the receive end are 300 to 499, 700 to 899, and 1100 to 1199. Further, after receiving three consecutive SACK responses having a same ACK transmission sequence number, Host A triggers fast retransmission in the TCP protocol, to retransmit the data packets with the SEQs of 100 to 299, as shown by fast retransmission in the figure.

It can be learned from this embodiment that the buffer at the receive end only needs to buffer the data packets with the SEQs of 1100 to 1199 and the SDSNs of 400 to 499. The data packets with the SEQs of 300 to 499 and the SEQs of 700 to 899 are in sequence in the stream 2, may be submitted to the application layer, and do not need to be buffered in the buffer due to out-of-order at the entire TCP connection layer. In the conventional TCP protocol, all data packets that are out of order at the connection layer, namely, the data packets with the SEQs of 300 to 499, 700 to 899, and 1100 to 1199, need to be buffered in the buffer at the receive end. Therefore, a large amount of buffer space at the receive end is occupied. In addition, a size of remaining buffer space at the receive end affects a maximum amount of data that can be sent by the transmit end, transmission efficiency and upper layer application experience are further affected.

According to the technical solution provided in this embodiment of this application, the conventional TCP protocol is extended to support multi-stream capability negotiation and multi-stream data transmission, so that sequential data packets in a stream can be directly submitted to the application layer, and submission of the sequential data packets in the stream is not affected by out-of-order at the entire connection layer, thereby effectively reducing head-of-line blocking and improving data transmission efficiency. In addition, compared with establishment of a plurality of TCP connections, where each independent TCP connection needs to be established through a three-way handshake, in the technical solution provided in this embodiment of this application, a quantity of TCP connections can be effectively decreased, thereby reducing load pressure of a server and effectively reducing an initial delay generated during connection establishment.

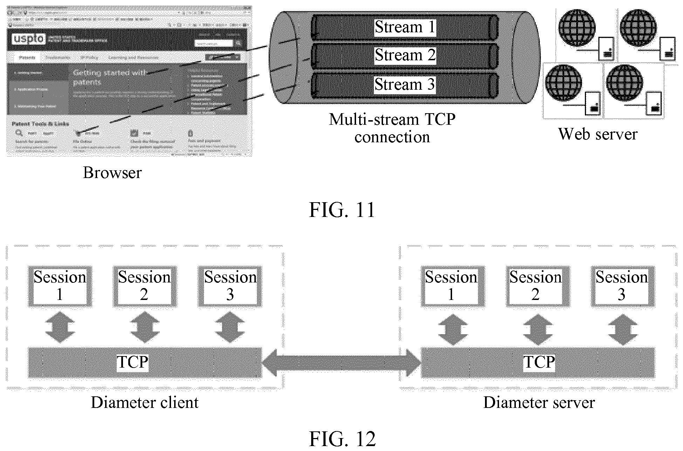

FIG. 11 is a schematic diagram of a data transmission method according to an embodiment of this application. In the embodiment of FIG. 11, the data transmission method provided in this application is applied to a Hypertext Transfer Protocol (Hyper Text Transport Protocol, HTTP)-based web service. Each web page includes different resources, such as text, a video, and a picture. When a client starts a browser to enter a website and waits for a response:

First, the client establishes an end-to-end multi-stream TCP connection to a web server at a transport layer. According to the embodiment of FIG. 4, the client constructs a data packet used for requesting to establish a multi-stream TCP connection, that is, sets a SYN flag in a TCP packet header to 1, randomly generates an SEQ, where SEQ=J, and generates key information for identifying an identity of the client. The client extends a TCP capability negotiation option, extends a kind field to kind=MSTCP, extends a subtype to MSCAPABLE, and sets a maximum quantity of accepted inbound streams maximum number of accepted inbound streamsfield. An encapsulation format of a capability negotiation option in a multi-stream TCP connection establishment request is shown in FIG. 6. The client sends the multi-stream TCP connection establishment request to the web server.

When the web server supports a multi-stream TCP capability, the web server returns a multi-stream TCP connection establishment response to the client. In the response, a SYN flag and an ACK flag are set to 1. An SEQ is randomly generated, where SEQ=K, key information for identifying an identity of the web server is generated, and ack=J+1 is set. The web server extends the TCP capability negotiation option, and extends the kind field to kind=MSTCP, and extends the subtype to be MS_CAPABLE. The web server sets the maximum quantity of accepted inbound streams maximum number of accepted inbound streams based on current load and processing capability. An encapsulation format of a capability negotiation option in the multi-stream TCP connection establishment response returned by the web server is shown in FIG. 6. The web server returns, to the client, the multi-stream TCP connection establishment response indicating that the multi-stream TCP capability is supported.

After receiving the response returned by the web server and indicating that the multi-stream TCP capability is supported, the client correspondingly returns a response. In the response returned by the client, an ACK flag is set to 1, ack=K+1, and key information of the client and key information of the web server are included in the optional extension option shown in FIG. 6. In this way, the end-to-end multi-stream TCP connection at the transport layer has been established between the client and the web server, and therefore multi-stream data transmission may be performed.

In this embodiment, it is assumed that the client requests three independent resources (which may not be necessarily three resources, and may be a plurality of resources): a video, a picture, and text. It is assumed that the video has a highest priority, the text has a priority lower than that of the video, and the picture has a lowest priority. The server simultaneously sends video, picture, and text resource data to the client. A stream priority identifier (stream priority identifier) of the video resource is X1, and a randomly generated unique stream identifier (stream identifier) is S1. A stream priority identifier of the text resource is X2, and a stream identifier is S2. A stream priority identifier of the picture resource is X3, and a stream identifier is S3. S1≠S2≠S3, and X1<X2<X3 (In this embodiment, a smaller value indicates a higher priority).

For each to-be-sent data packet, the web server identifies, by using a stream identifier stream identifier field, a stream to which the data packet belongs, and identifies, by using an SDSN field, a sequence of the data packet in the stream to which the data packet belongs. When receiving data from the server, the client first determines, based on stream identifiers, a stream to which the data packets belong, and then determines, based on an SDSN of a submitted data packet and SDSNs of the received data packets, whether the received data packets are in sequence in the stream to which the data packets belong. If the data packets are in sequence in the stream, the client submits the data packets to an upper layer browser for processing. Otherwise, the client buffers the data packets in a buffer at the client. Then, the client notifies, by using a SACK, the web server of the received data packets that are out of order and a next expected data packet. A possible data transmission process is shown in FIG. 9.

In this way, transmission between the video, picture, and text resources does not affect each other, and it is ensured that each resource can reliably arrive at the client and that a resource having a high priority is preferentially transmitted, thereby reducing head-of-line blocking, and improving experience quality for upper-layer application.

FIG. 12 is a schematic diagram of a data transmission method according to an embodiment of this application. In the embodiment of FIG. 12, the data transmission method provided in this application is applied to diameter protocol-based signaling interaction in a signaling network. A large quantity of parallel independent sessions, namely, a session 1, a session 2, and a session 3, exist between a diameter client (diameter client) and a diameter server (diameter server). These sessions may belong to different users. First, the diameter client establishes a multi-stream TCP connection to the diameter server. For a specific process, refer to S401, S402, and S403 in the embodiment of FIG. 4, and details are not described herein again. Then, the diameter client allocates a stream identifier to each diameter session. One stream may include only one diameter session, or may include a plurality of diameter sessions. When sessions received by the server are in sequence in a stream to which the sessions belong, the server submits the sequential sessions to an upper layer. Further, the server may provide a relatively high priority for some emergent sessions or subscribers, to improve transmission efficiency of the sessions and corresponding user experience quality. For a specific process, refer to S801 to S804 in the embodiment of FIG. 8, and details are not described herein again.

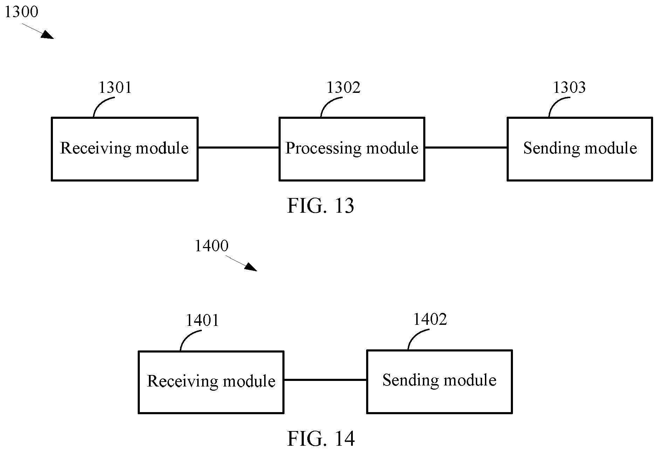

FIG. 13 is a schematic structural diagram of a data transmission apparatus 1300 according to an embodiment of this application. The data transmission apparatus 1300 includes a receiving module 1301, a processing module 1302, and a sending module 1303. The data transmission apparatus 1300 may be the receive end 202 in FIG. 2, the computer device in FIG. 3, the receive end in FIG. 4 and FIG. 8, the receive end B in FIG. 7, or Host B in FIG. 10. The receiving module 1301 may be configured to perform S803 in the embodiment of FIG. 8, the processing module 1302 may be configured to perform S804 in the embodiment of FIG. 8, and the sending module 1303 may be configured to perform S805 in the embodiment of FIG. 8.

The receiving module 1301 is configured to receive at least two streams from a transmit end. Each of the at least two streams includes a plurality of data packets, each data packet carries a stream identifier of a stream to which the data packet belongs and a stream data sequence number, and the stream data sequence number indicates a sequence of the data packet in the stream to which the data packet belongs.

The processing module 1302 is configured to: for at least one of the at least two streams, determine that a data packet whose stream data sequence number meets a sequential condition has been received.

The sending module 1303 is configured to submit the data packet whose stream data sequence number meets the sequential condition.

For a stream, the sequential condition includes that a stream data sequence number is a largest stream-level sequence number of a submitted data packet plus 1.

Before the processing module 1302 determines that the data packet whose stream data sequence number meets the sequential condition has been received, the processing module 1302 may be configured to record indication information for each of the at least two streams. The indication information indicates a largest stream-level sequence number of a submitted data packet.

For each of the at least two streams, when the sending module 1303 has not submitted any data packet, the indication information indicates that a stream data sequence number of a submitted data packet is empty. That the processing module 1302 determines that a data packet whose stream data sequence number meets a sequential condition has been received is as follows: the processing module 1302 determines that a data packet having an initial stream data sequence number has been received.

Each data packet further carries a stream priority identifier. When the receiving module 1301 receives a plurality of data packets whose stream data sequence numbers meet the sequential condition, the sending module 1303 preferentially submits a data packet in a stream that has a high priority and that is indicated by the stream priority identifier.

Each of the at least two streams corresponds to at least one resource.

According to the technical solution provided in this embodiment of this application, a conventional TCP protocol is extended to support multi-stream capability negotiation and multi-stream data transmission, so that sequential data packets in a stream can be directly submitted to an application layer, and submission of the sequential data packets in the stream is not affected by out-of-order at an entire connection layer, thereby effectively reducing head-of-line blocking and improving data transmission efficiency. In addition, compared with establishment of a plurality of TCP connections, where each independent TCP connection needs to be established through a three-way handshake, in the technical solution provided in this embodiment of this application, a quantity of TCP connections can be effectively decreased, thereby reducing load pressure of a server and effectively reducing an initial delay generated during connection establishment.

FIG. 14 is a schematic structural diagram of a TCP connection establishment apparatus 1400 according to an embodiment of this application. The data transmission apparatus 1400 includes a receiving module 1401 and a sending module 1402. The data transmission apparatus 1400 may be the receive end 202 in FIG. 2, the computer device in FIG. 3, the receive end in FIG. 4 and FIG. 8, the receive end B in FIG. 7, or Host B in FIG. 10.

The receiving module 1401 is configured to receive a connection establishment request from a transmit end. The connection establishment request carries a multi-stream capability indication parameter of the transmit end.

The sending module 1402 is configured to return a connection establishment response to the transmit end. The connection establishment response carries a multi-stream capability indication parameter of a receive end.

The receiving module 1401 is configured to: receive a connection establishment response from the transmit end, and establish a connection to the transmit end.

The multi-stream capability indication parameter of the receive end includes a maximum quantity of accepted inbound streams at the receive end, and a quantity of streams received by the receiving module from the transmit end is less than or equal to the maximum quantity of accepted inbound streams at the receive end.

The multi-stream capability indication parameter of the transmit end includes a maximum quantity of accepted inbound streams at the transmit end, and a quantity of streams sent by the sending module to the transmit end is less than or equal to the maximum quantity of accepted inbound streams at the transmit end.

According to the technical solution provided in this embodiment of this application, a conventional TCP protocol is extended to support multi-stream capability negotiation and multi-stream data transmission, so that sequential data packets in a stream can be directly submitted to an application layer, and submission of the sequential data packets in the stream is not affected by out-of-order at an entire connection layer, thereby effectively reducing head-of-line blocking and improving data transmission efficiency. In addition, compared with establishment of a plurality of TCP connections, where each independent TCP connection needs to be established through a three-way handshake, in the technical solution provided in this embodiment of this application, a quantity of TCP connections can be effectively decreased, thereby reducing load pressure of a server and effectively reducing an initial delay generated during connection establishment.

The "module" in FIG. 13 and FIG. 14 may be an application-specific integrated circuit (Application Specific Integrated Circuit, ASIC), an electronic circuitry, a processor and a memory for performing one or more software or firmware programs, a combined logical circuit, and another component providing the foregoing functions. Optionally, the data transmission apparatus and the TCP connection establishment apparatus each are implemented in a form of a computer device. The receiving module and the sending module each may be implemented by a processor, a memory, and a communications interface of the computer device, and the processing module may be implemented by the processor and the memory of the computer device.

It should be noted that although the computer device 300 shown in FIG. 3 shows only the processor 302, the memory 304, the communications interface 306, and the bus 308, in a specific implementation process, a person skilled in the art should understand that the data transmission apparatus and the TCP connection establishment apparatus further include other components necessary for normal operation. In addition, a person skilled in the art should understand that according to a specific requirement, the data transmission apparatus and the TCP connection establishment apparatus may further include hardware components for implementing other additional functions. Moreover, a person skilled in the art should understand that the data transmission apparatus and the TCP connection establishment apparatus may include only components necessary for implementing the embodiments of this application, and do not need to include all components shown in FIG. 3.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes various media that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising the following steps:
receiving, by a receive end, at least two streams from a transmit end, wherein each of the at least two streams comprises a plurality of data packets, each data packet carries a stream identifier of a stream to which the data packet belongs and a stream data sequence number, and the stream data sequence number indicates a sequence of the data packet in the stream to which the data packet belongs;
for at least one of the at least two streams, determining, by the receive end, that a data packet whose stream data sequence number meets a sequential condition has been received; and
submitting, by the receive end, the data packet whose stream data sequence number meets the sequential condition.

2. The method according to claim 1, wherein for a stream, the sequential condition comprises that a stream data sequence number is a largest stream-level sequence number of a submitted data packet plus 1.

3. The method according to claim 1 or 2, wherein before the determining, by the receive end, that a data packet whose stream data sequence number meets a sequential condition has been received, the receive end records indication information for each of the at least two streams, wherein the indication information indicates a largest stream-level sequence number of a submitted data packet.

4. The method according to claim 3, wherein for each of the at least two streams, when the receive end has not submitted any data packet, the indication information indicates that a stream data sequence number of a submitted data packet is empty; and the determining, by the receive end, that a data packet whose stream data sequence number meets a sequential condition has been received is: determining, by the receive end, that a data packet having an initial stream data sequence number has been received.

5. The method according to any one of claims 1 to 4, wherein each data packet further carries a stream priority identifier; and when the receive end receives a plurality of data packets whose stream data sequence numbers meet the sequential condition, the receive end preferentially submits a data packet in a stream that has a high priority and that is indicated by the stream priority identifier.

6. The method according to any one of claims 1 to 5, wherein each of the at least two streams corresponds to at least one resource.

7. A TCP connection establishment method, comprising the following steps:
receiving, by a receive end, a connection establishment request from a transmit end, wherein the connection establishment request carries a multi-stream capability indication parameter of the transmit end;
returning, by the receive end, a connection establishment response to the transmit end, wherein the connection establishment response carries a multi-stream capability indication parameter of the receive end; and
receiving, by the receive end, a connection establishment response from the transmit end, and establishing a connection to the transmit end.

8. The method according to claim 7, wherein the multi-stream capability indication parameter of the receive end comprises a maximum quantity of accepted inbound streams at the receive end, and a quantity of streams received by the receive end from the transmit end is less than or equal to the maximum quantity of accepted inbound streams at the receive end.

9. The method according to claim 7 or 8, wherein the multi-stream capability indication parameter of the transmit end comprises a maximum quantity of accepted inbound streams at the transmit end, and a quantity of streams sent by the receive end to the transmit end is less than or equal to the maximum quantity of accepted inbound streams at the transmit end.

10. A data transmission apparatus, comprising a receiving module, a processing module, and a sending module, wherein
the receiving module is configured to receive at least two streams from a transmit end, wherein each of the at least two streams comprises a plurality of data packets, each data packet carries a stream identifier of a stream to which the data packet belongs and a stream data sequence number, and the stream data sequence number indicates a sequence of the data packet in the stream to which the data packet belongs;
the processing module is configured to: for at least one of the at least two streams, determine that a data packet whose stream data sequence number meets a sequential condition has been received; and
the sending module is configured to submit the data packet whose stream data sequence number meets the sequential condition.

11. The apparatus according to claim 10, wherein for a stream, the sequential condition comprises that a stream data sequence number is a largest stream-level sequence number of a submitted data packet plus 1.

12. The apparatus according to claim 10 or 11, wherein before the processing module determines that the data packet whose stream data sequence number meets the sequential condition has been received, the processing module is configured to record indication information for each of the at least two streams, wherein the indication information indicates a largest stream-level sequence number of a submitted data packet.

13. The apparatus according to claim 12, wherein for each of the at least two streams, when the sending module has not submitted any data packet, the indication information indicates that a stream data sequence number of a submitted data packet is empty; and that the processing module determines a data packet whose stream data sequence number meets a sequential condition has been received is: determining, by the processing module, that a data packet having the first stream data sequence number has been received.

14. The apparatus according to any one of claims 10 to 13, wherein each data packet further carries a stream priority identifier; and when the receiving module receives a plurality of data packets whose stream data sequence numbers meet the sequential condition, the sending module preferentially submits a data packet in a stream that has a high priority and that is indicated by the stream priority identifier.

15. The apparatus according to any one of claims 10 to 14, wherein each of the at least two streams corresponds to at least one resource.

16. A TCP connection establishment apparatus, comprising a receiving module and a sending module, wherein
the receiving module is configured to receive a connection establishment request from a transmit end, wherein the connection establishment request carries a multi-stream capability indication parameter of the transmit end;
the sending module is configured to return a connection establishment response to the transmit end, wherein the connection establishment response carries a multi-stream capability indication parameter of a receive end; and
the receiving module is configured to: receive a connection establishment response from the transmit end, and establish a connection to the transmit end.

17. The apparatus according to claim 16, wherein the multi-stream capability indication parameter of the receive end comprises a maximum quantity of accepted inbound streams at the receive end, and a quantity of streams received by the receiving module from the transmit end is less than or equal to the maximum quantity of accepted inbound streams at the receive end.

18. The apparatus according to claim 16 or 17, wherein the multi-stream capability indication parameter of the transmit end comprises a maximum quantity of accepted inbound streams at the transmit end, and a quantity of streams sent by the sending module to the transmit end is less than or equal to the maximum quantity of accepted inbound streams at the transmit end.

19. A computing device, comprising a processor, a memory, a bus, and a communications interface, wherein the memory is configured to store a computing device executable instruction, the processor is connected to the memory by using the bus, and when the computing device runs, the processor executes the computing device executable instruction stored in the memory, so that the computing device performs the method according to any one of claims 1 to 6.

20. A computing device, comprising a processor, a memory, a bus, and a communications interface, wherein the memory is configured to store a computing device executable instruction, the processor is connected to the memory by using the bus, and when the computing device runs, the processor executes the computing device executable instruction stored in the memory, so that the computing device performs the method according to any one of claims 7 to 9.
